# EUROPÄISCHE PATENTSCHRIFT

(11) **EP 3 670 845 B1**
(45) Veröffentlichungstag und Bekanntmachung des Hinweises auf die Patenterteilung: **28.06.2023**
(21) Anmeldenummer: 19211562.4
(22) Anmeldetag: 26.11.2019
(51) Int. Cl.: F01D 11/00, F16J 15/08, F16J 15/3288, F02C 7/28, F16J 15/3216

(54) **STRÖMUNGSMASCHINE MIT STATISCHER DICHTUNGSANORDNUNG**
TURBOMACHINE WITH STATIC SEAL ASSEMBLY
TURBOMACHINE AVEC AGENCEMENT DE JOINT STATIQUE

(30) Priorität: 21.12.2018 DE 102018222827
(43) Veröffentlichungstag der Anmeldung: 24.06.2020
(73) Patentinhaber: MTU Aero Engines AG, 80995 München (DE)
(72) Erfinder: Feldmann, Manfred, 80995 München (DE); Schmalfuß, Simon, 80995 München (DE)

(56) Entgegenhaltungen:
- EP-A1- 2 990 699
- DE-A1- 10 351 583
- US-A1- 2010 327 535

## Beschreibung

Die vorliegende Erfindung betrifft eine Strömungsmaschine mit einer statischen Dichtungsanordnung zum Abdichten eines Spaltes zwischen einem ersten statischen Bauteil und einem zweiten statischen Bauteil der Strömungsmaschine.

Bei Turbomaschinen wie Flugtriebwerken, stationären Gasturbinen und dergleichen ist man regelmäßig bestrebt, mögliche Leckagespalte zwischen statischen Bauteilen wie axial hintereinander liegenden Ringraumwänden von zwei benachbarten Gehäusemodulen abzudichten. Die Abdichtung eines Spaltes zwischen zwei statischen Bauteilen wird auch als statische Abdichtung bezeichnet. Die Abdichtung eines Spaltes zwischen einem statischen und einem sich bewegenden Bauteil wird als dynamische Abdichtung bezeichnet. Aus der US 9,920,641 B2 ist eine Dichtungsanordnung zum Abdichten von zwei statischen Bauteilen einer Strömungsmaschine mit einem Kolbenring bekannt. Aufgrund der im Betrieb der Strömungsmaschine vorherrschenden hohen Temperaturen kann der Kolbenring durch Kriechen seine Vorspannung stark reduzieren und somit seine Dichtfunktion verlieren. Alternativ werden häufig Dichtungsanordnungen mit einem Dichtblech verwendet. Eine derartige Dichtungsanordnung ist in der US 6,988,369 B2 gezeigt. Diese Form der Dichtungsanordnung erfordert jedoch verhältnismäßig viel Bauraumhöhe, da zum Ausgleich von axialen Verschiebungen der gegeneinander abzudichtenden statischen Bauteile das Dichtblech eine große radiale Höhe aufweisen muss. Eine weitere häufig verwendete Dichtungsanordnung sieht die Verwendung einer liegenden Bürstendichtung zum Abdichten eines Spaltes zwischen zwei statischen Bauteilen vor. Derartige statische Dichtungsanordnungen sind zum Beispiel in der DE 10 2010 032 846 A1, DE 10 2011 083 814 A1, DE 103 51 583 A1 und in der EP 1 848 905 B1 gezeigt. EP2990699A1 und US20100327535A1 zeigen weitere Beispiele für statische Dichtungsanordnungen. Darüberhinaus zeigt die EP 1 848 905 B1 dynamische Dichtungsanordnungen mit einer stehenden Bürstendichtung zum Abdichten eines Spaltes zwischen einem statorseitigen Bauteil und einem rotorseitigen Bauteil.

Aufgabe der Erfindung ist es, eine Strömungsmaschine mit einer verbesserten Dichtungsanordnung an Gehäuseschnittstellen zu schaffen.

Diese Aufgabe wird gelöst durch eine Strömungsmaschine mit den Merkmalen des Patentanspruchs 1.

Eine erfindungsgemäße Strömungsmaschine hat eine statische Dichtungsanordnung zum Abdichten eines Spaltes zwischen einem ersten statischen Bauteil und einem zweiten statischen Bauteil der Strömungsmaschine. Die Dichtungsanordnung hat zumindest eine Bürstendichtung. Die Bürstendichtung ist mit ihrem Kopf in einem bezogen auf eine Maschinenlängsachse zu dem Spalt radial äußeren Einspannraum derart aufgenommen, dass sich ihr Borstenpaket in Radialrichtung der Strömungsmaschine erstrecken. Sie ist also stehend angeordnet. Die Bürstendichtung bildet mit jedem Bauteil eine Dichtstelle, wobei sie mit dem ersten Bauteil eine radiale Dichtstelle und mit dem zweiten Bauteil eine axiale Dichtstelle bildet.

Bei der erfindungsgemäßen Strömungsmaschine ist die Bürstendichtung außerhalb eines Heißgasstroms angeordnet und somit vor hohen Temperaturen geschützt. Die erfindungsgemäße Dichtungsanordnung kann somit turbinenseitig, beispielsweise im Bereich eines Turbinenzwischengehäuses verwendet werden. Plastische Verformungen des Bürstenpakets werden aufgrund des Fernhaltens von hohen Temperaturen verhindert, so dass die erfindungsgemäße Dichtungsanordnung auch bei hohen Temperaturen innerhalb der Strömungsmaschine seine Dichtwirkung erhält. Durch Biegung der Borsten bzw. Borstendrähte können radiale Verschiebungen an der radialen Dichtstelle der Bürstendichtung ausgeglichen werden. Durch Wahl der Länge, Dicke und Anstellwinkel der Borsten kann der mögliche radiale Hub der Bürstendichtung angepasst werden. Durch eine sich im Betrieb der Strömungsmaschine ergebende Druckdifferenz liegt das Bürstenpaket zuverlässig an der axialen Dichtstelle an. Bei einem bevorzugten Ausführungsbeispiel sind das erste Bauteil und das zweite Bauteil jeweils eine Ringraumwandung zur Bildung eines Abschnitts eines von dem Heißgas durchströmten Ringraums. Dabei ist in der Regel, aber nicht zwingend immer, das erste Bauteil in Strömungsrichtung des Heißgases vor dem zweiten Bauteil angeordnet. Alternativ kann das zweite Bauteil vor dem ersten Bauteil angeordnet sein.

Bevorzugterweise haben die Bauteile zwei sich axial überdeckende Zylinderabschnitte. Die Bürstendichtung bildet dabei mit dem Zylinderabschnitt des ersten Bauteils die radiale Dichtstelle und mit dem Zylinderabschnitt des zweiten Bauteils die axiale Dichtstelle. Die axiale Überdeckung des ersten und zweiten Bauteils bewirkt einen sicheren Hitzeschutz der Bürstendichtung vor hohen Temperaturen und ermöglicht einen Ausgleich von axialen Relativverschiebungen der beiden Bauteile zueinander, ohne das die Gefahr besteht, dass der Biegebelastete äußere Teil der Bürstendichtung dem Heißgas unmittelbar ausgesetzt ist. Zum anderen können axiale Verschiebungen des Borstenpakets an der radialen Dichtstelle ausgeglichen werden.

Wenn der Einspannraum der Bürstendichtung zu einem Sperrluftraum geöffnet ist, kann die Bürstendichtung an ihrer Einspannstelle, d.h. dem Bürstenkopf, gekühlt werden.

Der Einspannraum ist erfindungsgemäß endseitig eines Radialvorsprungs eines Traggehäuses angeordnet ist, das die beiden Bauteile aufnimmt. Durch die Lagerung der Bürstendichtung an dem Traggehäuse entstehen nur geringe Relativbewegungen, die durch die Flexibilität des Borstenpaketes ausgeglichen werden können. Gleichzeitig werden durch den Radialvorsprung ein erster Sperrluftraum und ein zweiter Sperrluftraum unterteilt, so dass die Sperrluft gezielt zur Bürstendichtung geführt wird.

Zwischen dem Zylinderabschnitt des zweiten Bauteils und dem Radialvorsprung kann ein Radialspalt gebildet sein. Zum einen ermöglicht der Radialspalt einen Ausgleich von Wärmetoleranzen des Radialvorsprungs und des zweiten Bauteils. Eine radiale Berührung wird vermieden. Wenn zusätzlich in dem hinteren Sperrluftraum ein geringerer Sperrluftdruck vorherrscht kann der Radialspalt als Fluidpassage wirken, durch die Sperrluft aus dem ersten Sperrluftraum in den zweiten Sperrluftraum strömen kann. Dies hat mehrere Vorteile. Zum einen ist die Sperrluft, die das Bürstenpaket außerhalb der ersten Dichtstelle durchströmt, in den nachfolgenden Sperrlufträumen bzw. Kavitäten weiterhin als Sperrluft nutzbar. Zum anderen kühlt die Sperrluftleckage durch den äußeren Teil der Bürstendichtung außerhalb der axialen Dichtstelle die Borsten der Bürstendichtung an der Stelle der höchsten Belastung, und zwar an der Einspannung.

Die Montage der Dichtungsanordnung in der Strömungsmaschine lässt sich vereinfachen, wenn das Traggehäuse axial in ein erstes Gehäusemodul zur Aufnahme des ersten Bauteils und in ein zweites Gehäusemodul zur Aufnahme des zweiten Bauteils unterteilt ist.

Die Montage lässt sich weiter vereinfachen, wenn der Radialvorsprung dem zweiten Traggehäuse zugeordnet ist. Die Stabilität der montierten Bauteile lässt sich erhöhen, wenn das zweite Bauteil mit dem Radialvorsprung verbunden ist. Somit wird das zweite Bauteil radial innen gehalten. Bevorzugterweise erfolgt die Halterung auf radialer Höhe des Einspannraums.

Die Montage lässt sich weiter vereinfachen, wenn das zweite Bauteil in Umfangsrichtung der Strömungsmaschine in Segmente unterteilt ist. Zum Ausgleich von Wärmespannungen sind benachbarte Segmente über jeweils einen Segmentenspalt in Umfangsrichtung voneinander beabstandet. Um ein Wegknicken der Borsten im Betrieb in Strömungsrichtung zu vermeiden, ist es vorteilhaft, wenn jede Borste an einem Segment anliegt. Durch diese Maßnahme sind die Borsten radial außen an ihren Kopfabschnitten gehalten und zudem radial innen axial gestützt. Ein beispielhafter Legewinkel der Borsten liegt bei 45° in Radialrichtung der Strömungsmaschine. Um ein Einfädeln und eine Beschädigung der Borsten im jeweiligen Segmentspalt zu vermeiden ist die Spalthöhe im Vergleich zur Spaltbreite relativ groß.

Um einen größtmöglichen Ausgleich von Wärmeausdehnungen zu gewährleisten, können die Segmentenspalte entsprechend breit ausgeführt sein. Um in diesem Fall noch eine Anlage jeder Borste an einem Segment zu gewährleisten, sieht ein Ausführungsbeispiel vor, die Segmentenspalte gegenüber den Legewinkeln zu verkippen. Die Segmentenspalte verlaufen dann nicht mehr streng radial, sondern enthalten ebenfalls eine umfangsseitige Komponente. Die Segmentenspalte verlaufen in Radialrichtung betrachtet schräg, wobei es vorteilhaft ist, wenn die Segementenspalte entgegengesetzt zu den Borsten verlaufen.

Eine erfindungsgemäße Strömungsmaschine wie ein Flugtriebwerk, eine statische Gasturbine oder eine Industrieturbine weist zumindest eine erfindungsgemäße Dichtungsanordnung auf. Eine derartige Strömungsmaschine zeichnet sich durch einen verbesserten Wirkungsgrad als eine vergleichbare herkömmliche Strömungsmaschine aus.

Sonstige vorteilhafte Ausführungsbeispiele der Erfindung sind Gegenstand weiterer Unteransprüche.

Im Folgenden werden bevorzugte Ausführungsbeispiele der Erfindung anhand von stark vereinfachten schematischen Darstellungen näher erläutert. Es zeigen:
- Figur 1: einen Längsschnitt durch eine in einer erfindungsgemäßen Strömungsmaschine montierte Dichtungsanordnung,
- Figur 2: eine axiale Draufsicht auf eine Bürstendichtung der Dichtungsanordnung im eingebauten Zustand mit geraden Segmentenspalten, und
- Figur 3: eine axiale Draufsicht auf eine Bürstendichtung der Dichtungsanordnung im eingebauten Zustand mit schrägen Segmentenspalten.

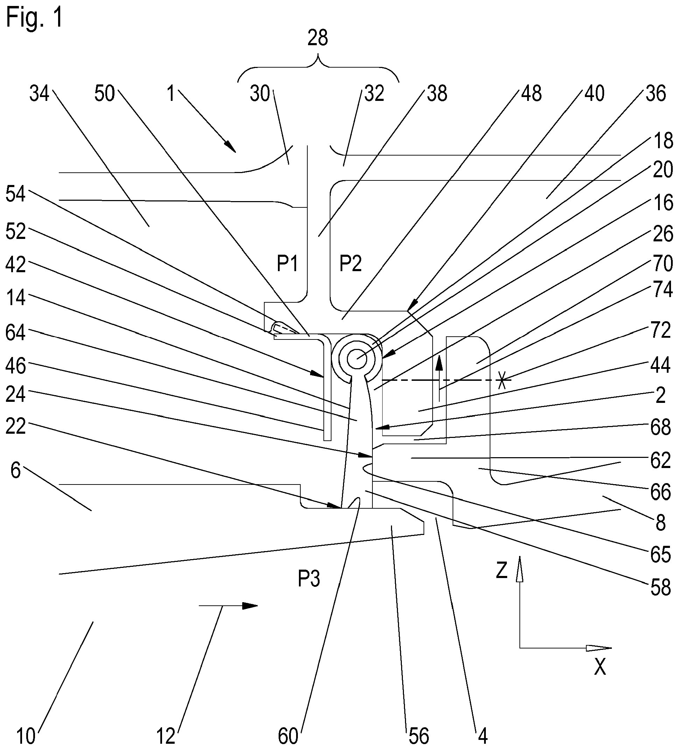

Figur 1 zeigt einen Längsschnitt durch eine statische Dichtungsanordnung 1 mit einer Bürstendichtung 2. Die Dichtungsanordnung 1 dient zum Abdichten eines Spaltes 4 zwischen einem ersten statischen Bauteil 6 und einem zweiten statischen Bauteil 8 einer erfindungsgemäßen Strömungsmaschine.

Die Strömungsmaschine ist beispielsweise ein Flugtriebwerk, eine stationäre Gasturbine eines Kraftwerks oder eine Industrieturbine. Sie hat eine sich in Axialrichtung erstreckende Maschinenlängsachse x bzw. Rotordrehachse und einen, die Maschinenlängsachse koaxial umgreifenden Ringraum 10. Turbinenseitig wird der Ringraum im Bereich der Bauteile 6, 8 von einem Heißgas im Wesentlichen in Axialrichtung durchströmt, angedeutet durch den Pfeil 12. Die Strömungsrichtung 12 des Heißgases entspricht somit im Bereich der Bauteile 6,8 im Wesentlichen der Maschinenlängsachse x.

Angaben bzw. Begriffe wie "Axialrichtung", Radialrichtung" und "Umfangsrichtung", "axial" oder "radial" beziehen sich auf die Maschinenlängsachse x der Strömungsmaschine.

Die Bauteile 6, 8 sind beispielsweise jeweils eine Ringraumwandung zur radialen Begrenzung des Ringraums 10. Das erste Bauteil 6 wird im Folgenden als vorderes Bauteil, und das zweite Bauteil wird im Folgenden als hinteres Bauteil bezeichnet.

Die Bürstendichtung 2 ist als ein Ring mit einer Vielzahl von Borsten 14 ausgebildet, die zusammen ein Borstenpaket bilden. Die Borsten 14 sind an ihrem radial äußeren Ende in einen Bürstenkopf 16 gehaltert und über einen äußeren Blechring 18 verspannt. Innerhalb des Bürstenkopfes 16 kann eine zentrale Sehne 20 angeordnet sein.

Erfindungsgemäß ist die Bürstendichtung 2 stehend angeordnet, so dass sich ihre Borsten 14 von dem Bürstenkopf 16 radial nach innen erstrecken. Stehend heißt im Sinne der Erfindung, dass die Bürstendichtung 2 eine maximale absolute Neigung von höchstens 30° zu der Radialrichtung z aufweist. In Radialrichtung z betrachtet liegt der Bürstenkopf 16 unmittelbar außen zu den Borsten 14. Die Bürstendichtung 2 bildet zudem erfindungsgemäß eine radiale Dichtstelle 22 mit dem vorderen Bauteil 6 und eine axiale Dichtstelle 24 mit dem hinteren Bauteil 8. Ihre Positionierung erfolgt über einen Einspannraum 26, der sich radial außen zum Spalt 4 befindet und einen Teil eines Traggehäuses 28 darstellt.

Das Traggehäuse 28 ist radial außen zu den Bauteilen 6, 8 angeordnet. Es besteht aus zwei lösbar miteinander verbundenen Gehäusemodulen 30, 32 bzw. aus einem vorderen Gehäusemodul 30 und aus einem hinteren Gehäusemodul 32, die jeweils einen zu den Bauteilen 6,8 rückwärtigen Sperrluftraum 34, 36 begrenzen. Jedes Gehäusemodul 30, 32 haltert ein Bauteil 6, 8. Der vordere Sperrluftraum 34 und der hintere Sperrluftraum 36 sind über einen sich von dem hinteren Gehäusemodul 32 radial nach innen erstreckenden Radialvorsprung 38 voneinander getrennt. Am freien Ende des Radialvorsprungs 38 ist die Bürstendichtung 2 angeordnet. Sie bildet quasi eine radiale Verlängerung des Radialvorsprungs 38 bis zur radialen Dichtstelle 22.

Die Sperrlufträume 34, 36 dienen zur Aufnahme von Sperrluft bzw. Kühlluft. Die Sperrluft bewirkt eine rückseitige Kühlung der Bauteile 6, 8 und der Bürstendichtung 2. Im Betrieb gilt folgendes Druckverhältnis zwischen den Sperrlufträumen 34, 36 untereinander und dem Ringraum 10. Der Druck p1 der Sperrluft im vorderen Sperrluftraum 34 ist größer als der Druck p2 der Sperrluft im hinteren Sperrluftraum und dieser ist größer als der Druck p3 des Heißgases im Ringraum 10. Ein Druckgefälle lautet somit: p1>p2>p3. Eine dazu alternative Ausgestaltung kann sein, dass das Druckgefälle lautet: p2>p1>p3. Die Bürstendichtung 2 ist dann entsprechend in axialer Richtung x gesehen spiegelverkehrt angeordnet. Vorzugsweise sind dann auch der Radialvorsprung 38 sowie das erste und zweite statische Bauteil dann in axialer Richtung x gesehen spiegelverkehrt angeordnet.

Zur Anordnung der Bürstendichtung 2 ist das freie Ende des Radialvorsprungs 38 als ein L-förmiger Endabschnitt 40 ausgebildet, der zusammen mit einem exemplarischen L-förmigen Klemmring 42 den Einspannraum 26 bildet. Die axiale Sicherung der Bürstendichtung 2 kann auch beispielsweise über einen axial verschraubten Rind oder einen Spiralsicherungsring erfolgen. Der Einspannraum 26 ist zwischen einer Radialwandung 44 des Endabschnitts 40 und einem stromaufwärtigen radialen Klemmschenkel 46 des Klemmrings gebildet. Radial außen ist der Einspannraum 26 über eine Zylinderwandung 48 des Endabschnitts 40 begrenzt. Radial innen ist der Einspannraum 26 zum vorderen Sperrluftraum 34 geöffnet. Im gezeigten montierten Zustand ist die Bürstendichtung zwischen der Radialwandung 44 und dem Klemmschenkel 46 eingespannt. Sie liegt mit ihrem Kopf 16 an der Zylinderwandung 48 an und ragt mit ihren Borsten 14 aus dem Einspannraum 26 radial nach innen heraus. Zur Sicherung des Klemmrings 46 in seiner Einspannposition kann er einen von der Radialwandung 44 axial wegzeigenden zylinderförmigen Halteschenkel 50 haben, der über plastisch verformbare Rastzungen 52 in korrespondierende Rastvertiefungen 54 eingreift.

Die radiale Dichtstelle 22 wird zwischen einem sich axial in Richtung des zweiten Bauteils 8 erstreckenden hinteren Zylinderabschnitt 56 des vorderen Bauteils 6 und einem freien Borstenende 58 gebildet. Die Bürstendichtung 2 liegt quasi mit ihrem Borstenende 58 in radialer Richtung senkrecht an einer radial äußeren Umfangsfläche 60 des hinteren Zylinderabschnitts 56 an. Der hintere Zylinderabschnitt 56 ragt in Strömungsrichtung 12 axial über den Einspannraum 26 hinaus.

Die axiale Dichtstelle 24 wird zwischen einem sich axial in Richtung des vorderen Bauteils 6 erstreckenden vorderen Zylinderabschnitt 62 und einem Mittenabschnitt 64 der Borsten 14 gebildet. Die Bürstendichtung 2 liegt mit ihrem Mittenabschnitt 64 axial an einer Ringstirnfläche 65 des vorderen Zylinderabschnitts 62 des hinteren Bauteils 8 an.

Der vordere Zylinderabschnitt 62 des hinteren Bauteils 8 ist radial außen zum vorderen Zylinderabschnitt 56 angeordnet. Er erstreckt sich von einem rückseitigen Ringsteg 66 des hinteren Bauteils 8. Er befindet sich mit dem hinteren Zylinderabschnitt 56 des ersten Bauteils 6 in axialer Überdeckung und ist von diesem radial beabstandet. Zwischen den beiden Zylinderabschnitten 56, 62 erstreckt sich der Spalt 4 von dem Ringraum 10 zum vorderen Sperrluftraum 34. Der vordere Zylinderabschnitt 62 des hinteren Bauteils 8 erstreckt sich axial entgegen der Strömungsrichtung 12 betrachtet über die Radialwandung 44 hinaus und endet mit seiner Ringstirnfläche 66 vor dieser radial innen zum Einspannraum 26. Er ist von der Zylinderwandung 62 radial beabstandet, so dass ein Ringspalt 68 zwischen der Radialwandung 44 und dem vorderen Zylinderabschnitt 62 des hinteren Bauteils 8 gebildet ist.

Zur Anbindung des hinteren Bauteils 8 an dem hinteren Gehäusemodul 32 erstrecken sich von dem Ringsteg 66 entsprechende Flanschabschnitte 70, mittels denen der vordere Zylinderabschnitt 62 des hinteren Bauteils 8 unter Verwendung eines geeigneten Befestigungsmittels 72 wie Schrauben oder Pins, die eine Axialverschiebung zulassen, mit der Radialwandung 44 vorzugsweise lösbar verbunden werden kann.

Wie durch den Pfeil 74 angedeutet, erfolgt aufgrund des höheren Drucks p1 in dem vorderen Sperrluftraum 34 als in dem hinteren Sperrluftraum 36 im Betrieb eine Sperrluftleckage durch den Ringspalt aus dem vorderen Sperrluftraum 34 in den hinteren Sperrluftraum 36. Durch die Sperrluftleckage 74 werden die Borsten 14 außerhalb der axialen Dichtstelle 24 gekühlt. Zudem wird der Bürstenkopf 16 durch die sich in dem Einspannraum 26 befindende Sperrluft des vorderen Sperrluftraums 34 gekühlt. Hierdurch wird die Bürstendichtung 2 an der Stelle ihrer höchsten Belastung, nämlich an ihrer Einspannung, gekühlt, so dass ein Vorspannungsverlust der Bürstendichtungsdrähte 14 verhindert wird.

Gleichzeitig wird die Bürstendichtung 2 durch das Druckgefälle p1>p2>p3 zwischen den beiden Sperrlufträumen 34, 36 in Kombination mit dem kleinsten Druck p3 im Ringraum 10 mit ihrem Mittenabschnitt 64 gegen die Ringstirnfläche 65 gedrückt. Des Weiteren wird durch das Druckgefälle p1>p2>p3 verhindert, dass Heißgas aus dem Ringraum 10 durch den Spalt 4 in den vorderen Sperrluftraum 34 einströmt.

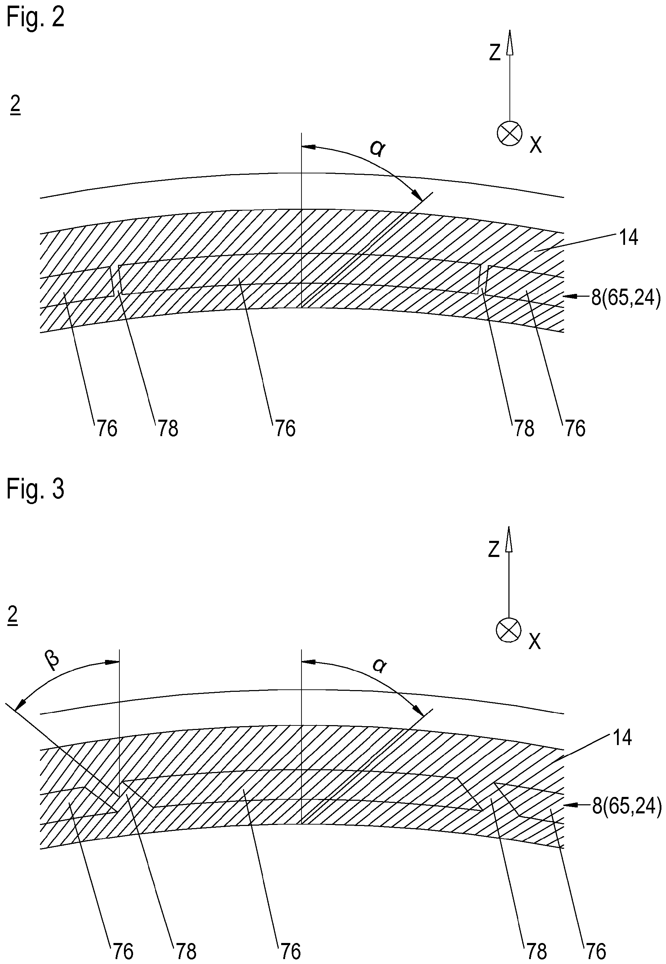

In Figur 2 ist eine Draufsicht auf einen Abschnitt einer Bürstendichtung 2 in Strömungsrichtung bei entferntem vorderen Bauteil 6 gezeigt. Wie zu erkennen, ist bei einem Ausführungsbeispiel das hintere Bauteil 8 in Umfangsrichtung in Segmente 76 unterteilt ist, die über jeweils einen Segmentenspalt 78 in Umfangsrichtung voneinander beabstandet sind. Die Borsten 14 sind in Radialrichtung z angestellt. Zur Stabilisierung der Borsten 14 sind die Spaltenbreite, die Spaltenhöhe und der Legewinkel so aufeinander abgestimmt, dass jede Borste 14 an zumindest einem Segment 76 des hinteren Bauteils 8 axial bzw. an die axiale Dichtstelle 24 bildenden Segmentenringflächen (Ringstirnfläche 65 geteilt durch Anzahl der Segmente 76) anliegt. In dem hier gezeigten Ausführungsbeispiel weisen die Borsten 14 einen Legewinkel α = 45° auf. Die Segmentenspalte 78 verlaufen gerade in Radialrichtung z. Ihre radiale Höhe ist bevorzugterweise wesentlich größer als ihre Breite in Umfangsrichtung. Die Segmentenspalte 76 sind mittels nicht gezeigten Dichtstreifen geschlossen.

In Figur 3 ist eine Draufsicht auf einen Abschnitt einer Bürstendichtung 2 in Strömungsrichtung bei entferntem vorderen Bauteil 6 bei einem weiteren erfindungsgemäßen Ausführungsbeispiel gezeigt. Im Unterschied zum Ausführungsbeispiel nach Figur 2 sind bei dem Ausführungsbeispiel nach Figur 3 die Segmentenspalte 78 zwischen benachbarten Segmenten 76 des hinteren Bauteils 8 in Radialrichtung angestellt. Die Segmentenspalte 78 sind gegenüber den Borsten 14 um einen Kippwinkel β verkippt, wobei sie entgegengesetzt zu den Borsten 14 verlaufen. Durch die Verkippung können die Segmentenspalte 78 mit einer größeren Spaltenbreite als im Vergleich zur in Figur 2 gezeigten streng radialen Ausrichtung der Segmentenspalte 76 ausgeführt werden, so dass größere Wärmeausdehnungen möglich sind. Zur Stabilisierung der Borsten 14 sind die Spaltenbreite, Spaltenhöhe, der Kippwinkel β und der Legewinkel α so aufeinander abgestimmt, dass jede Borste 14 an zumindest einem Segment 76 des hinteren Bauteils 8 axial bzw. an die axiale Dichtstelle 24 bildenden Segmentenringflächen (Ringstirnfläche 65 geteilt durch Anzahl der Segmente 76) anliegt.

Es wird erwähnt, dass, auch wenn in Figur 3 nur eine Segmentierung des hinteren Bauteils 6 gezeigt ist, ebenso das vordere Bauteil 6, das vordere Gehäusemodul 30 und/oder das hintere Gehäusemodul 32 in Umfangsrichtung segmentiert sein kann.

Offenbart sind eine statische Dichtungsanordnung zum Abdichten eines Spaltes zwischen einem ersten statischen Bauteil und einem zweiten statischen Bauteil einer Strömungsmaschine wie ein Flugtriebwerk oder eine statische Gasturbine, mit einer von einem Heißgas entfernt gehalternden Bürstendichtung, die mit ihrem von Kühlluft umströmbaren Einspannabschnitt in einem zu dem Spalt radial äußeren Einspannraum im Wesentlichen stehend angeordnet ist und die mit dem ersten Bauteil eine radiale Dichtstelle und mit der zweiten Bauteil eine axiale Dichtstelle bildet, sowie eine Strömungsmaschine.

### Bezugszeichenliste

- 1: Dichtungsanordnung
- 2: Bürstendichtung
- 4: Spalt
- 6: erstes statisches Bauteil / vorderes Bauteil
- 8: zweites statisches Bauteil / hinteres Bauteil
- 10: Ringraum
- 12: Strömungsrichtung
- 14: Borsten
- 16: Bürstenkopf / Kopf
- 18: Blechring
- 20: Sehne
- 22: radiale Dichtstelle
- 24: axiale Dichtstelle
- 26: Einspannraum
- 28: Traggehäuse
- 30: vorderes Gehäusemodul
- 32: hinteres Gehäusemodul
- 34: vorderer Sperrluftraum
- 36: hinterer Sperrluftraum
- 38: Radialvorsprung
- 40: L-förmiges Endabschnitt
- 42: L-förmiger Klemmring
- 44: Radialwandung
- 46: radiale Klemmschenkel
- 48: Zylinderwandung
- 50: Halteschenkel
- 52: Rastzunge
- 54: Rastvertiefung
- 56: hinterer Zylinderabschnitt
- 58: Borstenende
- 60: Umfangsfläche
- 62: vorderer Zylinderabschnitt
- 64: Mittenabschnitt
- 65: Ringstirnfläche
- 66: Ringsteg
- 68: Ringspalt
- 70: Flanschabschnitte
- 72: Befestigungsmittel
- 74: Sperrluftleckage
- 76: Segmente
- 78: Segmentenspalt

- x: Maschinenlängsachse
- z: Radialrichtung

- α: Legewinkel
- β: Kippwinkel

## Patentansprüche

1. Strömungsmaschine mit einer statischen Dichtungsanordnung (1) zum Abdichten eines Spaltes (4) zwischen einem ersten statischen Bauteil (6) und einem zweiten statischen Bauteil (8) der Strömungsmaschine, wobei die statische Dichtungsanordnung (1) eine Bürstendichtung (2) aufweist, die mit ihrem Kopf (16) in einem zu dem Spalt (4) radial äußeren Einspannraum (26) stehend angeordnet ist und die mit dem ersten Bauteil (6) eine radiale Dichtstelle (22) und mit dem zweiten Bauteil (8) eine axiale Dichtstelle (24) bildet,
**dadurch gekennzeichnet,**
**dass** der Einspannraum (26) endseitig eines Radialvorsprungs (38) eines Traggehäuses (28) angeordnet ist, das die beiden Bauteile (6, 8) aufnimmt, wobei durch den Radialvorsprung (38) ein erster Sperrluftraum (34) und ein zweiter Sperrluftraum (36) unterteilt werden, so dass im Betrieb eine Sperrluft gezielt zur Bürstendichtung geführt wird.

2. Strömungsmaschine nach Patentanspruch 1, wobei die Bauteile (6, 8) zwei sich axial überdeckende Zylinderabschnitte (56, 62) haben und die Bürstendichtung (2) mit dem Zylinderabschnitt (56) des ersten Bauteils (6) die radiale Dichtstelle (22) und mit dem Zylinderabschnitt (62) des zweiten Bauteils (8) die axiale Dichtstelle (24) bildet.

3. Strömungsmaschine nach Patentanspruch 1 oder 2, wobei der Einspannraum (26) der Bürstendichtung (26) zu einem Sperrluftraum (34) geöffnet ist.

4. Strömungsmaschine nach Patentanspruch 1, 2 oder 3, wobei
die Bürstendichtung ein Borstenpaket aus Borsten (14) aufweist,
wobei das erste Bauteil (6) ein vorderes Bauteil ist, und
wobei das zweite Bauteil (8) ein hinteres Bauteil ist,
wobei die axiale Dichtstelle (24) zwischen einem sich axial in Richtung des vorderen ersten Bauteils (6) erstreckenden vorderen Zylinderabschnitt (62) und einem Mittenabschnitt (64) der Borsten (14) gebildet, wobei die Bürstendichtung (2) mit ihrem Mittenabschnitt (64) axial an einer Ringstirnfläche (65) des vorderen Zylinderabschnitts (62) des hinteren Bauteils (8) anliegt.

5. Strömungsmaschine nach Patentanspruch 2, oder nach Patentanspruch 3 oder 4, wenn auf Patentanspruch 2 rückbezogen, wobei zwischen dem Zylinderabschnitt (62) des zweiten Bauteils (8) und dem Radialvorsprung (38) ein Ringspalt (68) gebildet ist.

6. Strömungsmaschine nach einem der vorhergehenden Ansprüche, wobei das Traggehäuse (28) axial in ein erstes Gehäusemodul (30) zur Aufnahme des ersten Bauteils (6) und in ein zweites Gehäusemodul (32) zur Aufnahme des zweiten Bauteils (8) unterteilt ist.

7. Strömungsmaschine nach Patentanspruch 4, 5 oder 6, wobei der Radialvorsprung (38) dem zweiten Gehäusemodul (32) zugeordnet ist und das zweite Bauteil (8) mit dem Radialvorsprung (38) verbunden ist.

8. Strömungsmaschine nach einem der vorhergehenden Patentansprüche, wobei das zweite Bauteil (8) in Umfangsrichtung in Segmente (76) unterteilt ist, die über jeweils einen Segmentenspalt (78) in Umfangsrichtung voneinander beabstandet sind, und Borsten (14) der Bürstendichtung (2) in Radialrichtung (z) so ausgerichtet sind, dass sich jede Borste (14) axial an einem der Segmente (76) abstützt.

9. Strömungsmaschine nach Patentanspruch 8, wobei die Segmentenspalte (78) zwischen benachbarten Segmenten (76) in Radialrichtung (z) angestellt sind.

10. Strömungsmaschine nach einem der vorhergehenden Ansprüche, wobei die Bürstendichtung (2) mit einer maximalen absoluten Neigung von 30° zur Radialrichtung (z) steht.

## Claims

1. Turbomachine comprising a static sealing arrangement (1) for sealing a gap (4) between a first static component (6) and a second static component (8) of the turbomachine, the static sealing arrangement (1) having a brush seal (2), which is arranged so as to be standing with its head (16) in a clamping space (26), which is radially outside with respect to the gap (4), and which brush seal forms a radial sealing point (22) with the first component (6) and an axial sealing point (24) with the second component (8),
**characterized in that** the clamping space (26) is arranged at the end of a radial projection (38) of a support housing (28), which receives the two components (6, 8),
a first sealing air space (34) and a second sealing air space (36) being divided by the radial projection (38), so that sealing air is guided in a targeted manner to the brush seal during operation.

2. Turbomachine according to claim 1, wherein the components (6, 8) have two axially overlapping cylinder portions (56, 62) and the brush seal (2) forms the radial sealing point (22) together with the cylinder portion (56) of the first component (6) and forms the axial sealing point (24) together with the cylinder portion (62) of the second component (8).

3. Turbomachine according to claim 1 or 2, wherein the clamping space (26) of the brush seal (26) is open to a sealing air space (34).

4. Turbomachine according to claim 1, 2, or 3,
wherein the brush seal has a bristle pack of bristles (14),
wherein the first component (6) is a front component, and
wherein the second component (8) is a rear component,
wherein the axial sealing point (24) is formed between a front cylinder portion (62) extending axially toward the front first component (6) and a central portion (64) of the bristles (14), wherein the central portion (64) of the brush seal (2) axially abuts an annular end face (65) of the front cylinder portion (62) of the rear component (8).

5. Turbomachine according to claim 2, or according to claim 3 or 4 when dependent on claim 2, wherein an annular gap (68) is formed between the cylinder portion (62) of the second component (8) and the radial projection (38).

6. Turbomachine according to any of the preceding claims, wherein the support housing (28) is divided axially into a first housing module (30) for receiving the first component (6) and into a second housing module (32) for receiving the second component (8).

7. Turbomachine according to claim 4, 5 or 6, wherein the radial projection (38) is associated with the second housing module (32) and the second component (8) is connected to the radial projection (38).

8. Turbomachine according to any of the preceding claims, wherein the second component (8) is divided in the circumferential direction into segments (76) which are each spaced apart from one another in the circumferential direction by a segment gap (78), and bristles (14) of the brush seal (2) are oriented in the radial direction (z) such that each bristle (14) is supported axially on one of the segments (76).

9. Turbomachine according to claim 8, wherein the segment gaps (78) are positioned between adjacent segments (76) in the radial direction (z).

10. Turbomachine according to any of the preceding claims, wherein the brush seal (2) is at a maximum absolute inclination of 30° relative to the radial direction (z).

## Revendications

1. Turbomachine comportant un dispositif d'étanchéité statique (1) pour l'étanchéification d'une fente (4) entre un premier composant statique (6) et un second composant statique (8) de la turbomachine, dans laquelle le dispositif d'étanchéité statique (1) présente un joint à brosse (2), lequel est disposé vertical avec sa tête (16) dans un espace de fixation (26) radialement extérieur par rapport à la fente (4) et lequel forme avec le premier composant (6) un point d'étanchéité radial (22) et avec le second composant (8) un point d'étanchéité axial (24),
**caractérisée en ce**
**que** l'espace de fixation (26) est ménagé à l'extrémité d'une saillie radiale (38) d'un boîtier de support (28) qui reçoit les deux composants (6, 8), dans laquelle la saillie radiale (38) divise un premier espace d'air de blocage (34) et un second espace d'air de blocage (36), de telle sorte que pendant le fonctionnement, un air de blocage est mené de manière ciblée vers le joint à brosse.

2. Turbomachine selon la revendication de brevet 1, dans laquelle les composants (6, 8) ont deux sections de cylindre (56, 62) se recouvrant axialement, et le joint à brosse (2) forme avec la section de cylindre (56) du premier composant (6) le point d'étanchéité radial (22) et avec la section de cylindre (62) du second composant (8) le point d'étanchéité axial (24).

3. Turbomachine selon la revendication de brevet 1 ou 2, dans laquelle l'espace de fixation (26) du joint à brosse (26) est ouvert vers un espace d'air de blocage (34).

4. Turbomachine selon la revendication de brevet 1, 2 ou 3, dans laquelle
le joint à brosse présente un paquet de poils constitué de poils (14),
dans laquelle le premier composant (6) est un composant frontal, et
dans laquelle le second composant (8) est un composant arrière,
dans laquelle le point d'étanchéité axial (24) est formé entre une section de cylindre frontale (62) s'étendant axialement en direction du premier composant frontal (6) et une section centrale (64) des poils (14), dans laquelle le joint à brosse (2) s'appuie avec sa section centrale (64) axialement sur une face frontale annulaire (65) de la section de cylindre frontale (62) du composant arrière (8).

5. Turbomachine selon la revendication de brevet 2, ou selon la revendication de brevet 3 ou 4, lorsqu'elle dépend de la revendication 2, dans laquelle une fente annulaire (68) est formée entre la section de cylindre (62) du second composant (8) et la saillie radiale (38).

6. Turbomachine selon l'une des revendications précédentes, dans laquelle le boîtier de support (28) est divisé axialement en un premier module de boîtier (30) pour la réception du premier composant (6) et en un second module de boîtier (32) pour la réception du second composant (8).

7. Turbomachine selon la revendication de brevet 4, 5 ou 6, dans laquelle la saillie radiale (38) est associée au second module de boîtier (32) et le second composant (8) est relié à la saillie radiale (38).

8. Turbomachine selon l'une des revendications précédentes, dans laquelle le second composant (8) est divisé en segments (76) dans la direction circonférentielle, lesquels segments sont séparés les uns des autres dans la direction circonférentielle par l'intermédiaire de respectivement une fente de segment (78), et les poils (14) du joint à brosse (2) sont orientés dans la direction radiale (z) de telle sorte que chaque poil (14) s'appuie axialement sur l'un des segments (76).

9. Turbomachine selon la revendication de brevet 8, dans laquelle les fentes de segments (78) entre des segments (76) adjacents sont dirigées dans la direction radiale (z).

10. Turbomachine selon l'une des revendications précédentes, dans laquelle le joint à brosse (2) se situe à une inclinaison absolue maximale de 30° par rapport à la direction radiale (z).
